# EUROPEAN PATENT APPLICATION

(11) **EP 2 101 172 A1**
(43) Date of publication of application: **16.09.2009**
(21) Application number: 08152629.5
(22) Date of filing: 12.03.2008
(51) Int. Cl.: G01N 27/80

(54) **A method and a device for use in connection with manufacturing a vehicle or a part for a vehicle**

(71) Applicant: Scania CV AB, 151 87 Södertälje (SE)
(72) Inventor: Thibblin, Anders, 146 50, Tullinge (SE)
(74) Representative: Reyier, Ann-Mari

(57) **Abstract**

The present invention relates to a method and a device (3) for handling at least one component (1) of cast iron intended to be used in a vehicle or in a part for a vehicle. The invention comprises applying a magnetic field over the component (1), measuring the total magnetic flux induced in the component, estimating the hardness of the material in the component based on the measured total magnetic flux induced, and determining whether the estimated hardness lies within an allowed hardness interval.

## Description

### TECHNICAL FIELD

The present invention relates to a method and a device for use in connection with manufacturing of a vehicle or a part for a vehicle.

### PRIOR ART

When producing vehicles, and/or parts for vehicles, such as automobiles, trucks or engines, various components are assembled into the finished vehicle. In order to ensure the function and quality of the finished vehicle it is sometimes desirable to test some of the components, for example, concerning their dimensions, material qualities etc. before assembly. It is desirable that the tests performed on the components are non-destructive, since otherwise the test may in itself destroy or deteriorate the components. However, non-destructive tests are not always available.

In document WO 2007030050 use of the magnetic Barkhausen noise method for non-destructive testing of the hardness of a grey cast iron component is shown. The Barkhausen noise method comprises magnetizing a ferromagnetic material by applying a varying magnetic field. The magnetic domains in the material become pinned down by dislocations or other defects, so that the magnetization is stepwize. By measuring the noise created by the stepwize magnetization an estimation of the number of defects, and hence also the hardness of the material, can be made.

The Barkhausen noise method is easily applicable on steels, due to the regularity of their grain distribution. However, it is very difficult to estimate material characteristics with the Barkhausen noise method in less regular materials, such as cast iron. Cast iron has large variations in grain size and also a high content of carbon and alloying elements. Components made by cast iron are therefore difficult to test with the Barkhausen noise method regarding their hardness, which is also stated in the document WO 2007030050.

### SUMMARY OF THE INVENTION

An object of the present invention is to provide a method and a device for handling at least one component of cast iron adapted for use in a vehicle, in order to increase the quality of the vehicle.

This object is achieved with the method defined in claim 1, and the device defined in claim 10.

According to the invention a magnetic field is applied over the cast iron component, the total magnetic flux induced in the component is measured, and the hardness of the material in the component is estimated based on the measured total magnetic flux. With the invention it has been realized that the total magnetic flux induced in the component by an external field gives a much better correlation with hardness in cast iron than the parameters measured with the Barkhausen noise method. Due to the extraordinary correlation between hardness and the total induced magnetic flux, the accuracy in the hardness estimation is improved.

Preferably, the method is performed in connection with manufacturing a vehicle or a part for a vehicle, wherein the vehicle or part for a vehicle is to comprise the at least one component of cast iron. Preferably the method comprises determining whether the estimated hardness lies within an allowed hardness interval. Preferably, the method also comprises accepting the component for use in the manufacturing of the vehicle or part for a vehicle when the estimated hardness lies within the allowed hardness interval, and rejecting the component for use in the manufacturing when the estimated hardness lies outside the allowed hardness interval. The improved accuracy of the hardness estimation increases the probability of a correct determination of allowed and rejected cast iron components. A component of cast iron having an estimated hardness outside the interval, and which is therefore likely to fail, may then, for example, be reworked, be measured by another more reliable measuring method, or be rejected. Thus, the quality of the vehicle improves with a smaller probability of failure. Furthermore the cost for measuring the component decreases since the method of magnetization and measuring the magnetic flux is both non-destructive and quick and easy to use. The method of magnetizing and measuring the magnetic flux takes only a few seconds to perform and thus the method is very suitable for use in a production line in which each operation may only take a limited amount of time.

Preferably the method also comprises moving the sensor and/or component into contact with each other for automatic estimation of the hardness. The method also comprises assigning a specific cast iron component into an allowed or rejected group. The method also comprises assembling the allowed component into the vehicle or engine. By measuring the component either before accepting a delivery from a supplier, before carrying out further work on the component, or before assembling the component into the vehicle, it is ensured that the component has suitable hardness. A component which is too hard runs the risk of cracking, or may cause problems when machining, while a component which is too soft may not be able to withstand the forces acting on the component in use, and might fail due to wear, bending or fatigue. The term component is here taken to comprise material blanks, semi- or fully-machined components, or a finished module.

The total magnetic flux comprises the surface integral of the magnetic flux density, or magnetic field, over the total area through which the magnetic field passes. The measuring unit of the estimated hardness may be defined by any hardness measuring method, such as Vickers hardness. In this document Brinell hardness units are used, and where real values are given as opposed to estimated hardness, they have been measured by using a ball with a diameter of 2,5 mm and a load force of 187,5 kg.

According to one embodiment of the invention the method comprises applying a varying magnetic field over the component. According to a further embodiment the method comprises applying a magnetic field varying with a frequency below 60 Hz, preferably below 25 Hz, more preferably below 2 Hz, and most preferably below 1 Hz. By letting the frequency of the applied magnetic field be low the field have time to penetrate deeper into the material of the component, meaning that the hardness estimation will originate from a larger volume within the component, which in turn gives better values for the estimation. It also decreases the influence from the surface. For a component to be used in a vehicle or engine the hardness inside the component may be as important as the hardness on the outside of the component.

According to one embodiment the invention comprises measuring the total magnetic flux response with an analyzing frequency smaller than or equal to 3000 Hz, preferably smaller than or equal to 2400 Hz, and most preferably smaller than or equal to 1800 Hz. A measuring circuit may be arranged to resonate with a particular frequency, meaning that the total magnetic flux having the same frequency will be measured to the greatest magnitude. By setting the measuring circuit to resonate at lower frequencies, the induced magnetic flux that penetrates deeper into the component will be measured.

According to one embodiment the invention comprises applying a magnetization probe onto the surface of the component. Preferably the probe comprises a body made in a magnetically conducting material and a magnetizing coil coiled around one part of the body. Preferably the body is made in a ferro-magnetic material or similar, having an ability to enhance the magnetic field inside the material. Thus the magnetic flux produced by the magnetizing coil will be enhanced by the material in the body, so that a stronger flux is obtained, giving a better measurement.

According to one embodiment the invention comprises measuring the total magnetic flux response with a measuring coil coiled around another part of the body. Since the entire magnetic flux passes through the body it is thus ensured that all the magnetic flux is measured, decreasing sources of errors. Preferably the body is U-shaped, comprising a middle portion and two legs, wherein the body is adapted to bear against the surface of the component by virtue of its two legs, at two different positions.

According to one embodiment of the invention said component is a cylinder liner of cast iron. A cylinder liner covers the inside of the combustion chamber of an engine and is subjected to a hostile environment, especially in diesel engines. The cylinder liner is therefore changed periodically. The cylinder liner must withstand both wear and fatigue. The hardness of the cylinder liner is therefore very important for achieving a long lifetime. Furthermore, the surfaces of the cylinder liner are machined and thus constitute good surfaces for measurement. The allowed estimated hardness interval may lie between 150 - 500 HBW, depending on the material of the cylinder liner.

According to one embodiment of the invention said component is made of grey cast iron. In one embodiment the component of grey cast iron is the engine block or a cylinder head. In another preferred embodiment said component comprises a cylinder liner of grey cast iron. Grey cast iron is particularly difficult to measure by use of magnetic Barkhausen noise since the grey cast iron comprises flakes of graphite interspaced inside the metal matrix.

In one embodiment of the invention the method comprises measuring the magnetic flux on a machined section of the surface of the component. It has been discovered that different surface roughness have a profound effect on the result when measuring a component with the magnetic flux. By measuring on machined surfaces the influence from different surface roughness for different components decreases, giving a better correlation, and lower statistical deviation between the estimated hardness and the real hardness of the component.

According to one embodiment of the invention the method comprises estimating residual tension within the material of the component of cast iron. The residual tension also influences the performance of the component by compressing forces aiding durability and tensile forces impairing durability. Thus, measuring and considering the residual tension increases the quality of the vehicle or engine. The method may also comprise determining whether the estimated residual tension lies within an allowed interval. The method may also comprise determining whether the estimated hardness and residual tension lies within an allowed combined space of hardness and residual tension, since the quality of the component is based on their combination.

### BRIEF DESCRIPTION OF THE DRAWINGS

The invention is now to be described as a number of non-limiting examples of the invention with reference to the attached drawings.
- Fig. 1: shows a device for automatic measurement of a cylinder liner according to one example of the invention.
- Fig. 2: shows a sensor probe measuring a component according to one example of the invention.
- Fig. 3: shows a method according to one example of the invention.
- Fig. 4: shows one example of the hardness correlation with measured magnetic flux on grey cast components.

### DETAILED DESCRIPTION

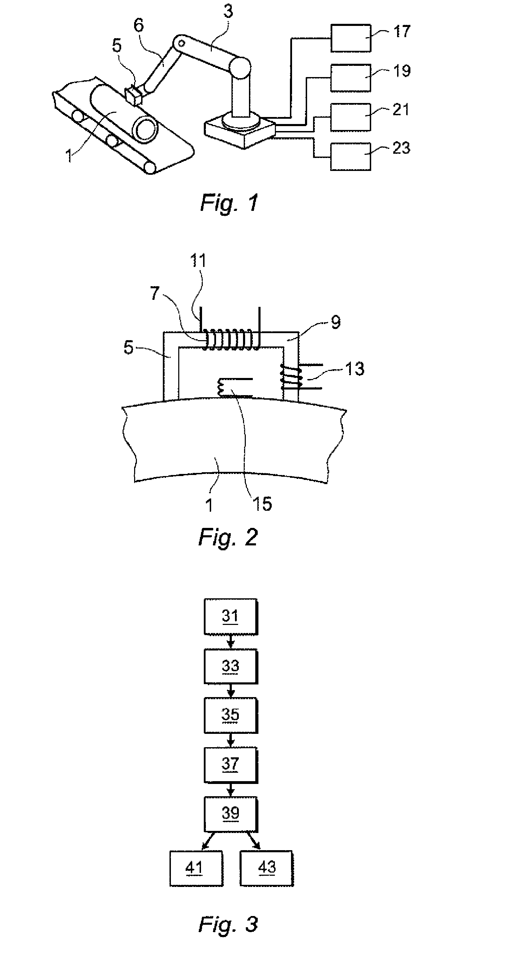

In Fig. 1 a component 1, in this example a cylinder liner, adapted for use in a vehicle or engine is shown. In this example the cylinder liner is made of grey cast iron, since grey cast iron has high resistance against fatigue, and has good heat conducting and dampening properties. The grey cast iron is alloyed with a heightened level of phosphorus in order to increase the hardness and strength of the material. It is imperative that the material of the cylinder liner is neither too hard, which would lead to cracking or problems when machining, nor too soft, which would lead to premature wear of the cylinder liner.

In Fig. 1 a device 3 for measuring the magnetic flux is shown. The device comprises a sensor probe 5 adapted to be applied onto the surface of the cylinder liner 1, and to measure the total magnetic flux induced in the material. The device 3 further comprises hardware and/or software adapted to carry out and control the measurement of the total magnetic flux and to carry out any necessary calculations as described below. The device 3 further comprises a robot arm 6, arranged to move the sensor probe 5 to bear against the cylinder liner, wherein the device 3 is adapted for automatic measurement of the total magnetic flux. In another example the device 3 may instead be arranged to move the cylinder liner to the sensor probe 5 for automatic measurement.

In Fig. 2 an example of the sensor probe 5 is shown in more detail. The sensor probe 5 comprises an electromagnet 7 comprising a body 9 in a ferro-magnetic material, and a coil 11 winded around one part of the body 9 and adapted to generate a magnetic field. The body 9 is U-shaped, having a middle portion and two legs, and is adapted to bear against the surface of the component with its two legs at two different positions. The U-shaped body 9 is further adapted to conduct the generated magnetism into the cylinder liner 1. The sensor probe 5 further comprises a sensor 13 comprising a passive coil 13 coiled around another part of the body 9, and being adapted to sense the total magnetic flux. In operation the sensor probe 5 is applied onto the surface of the component 1, and the device 3 activates the electromagnet 7 to apply a varying magnetic field with a certain frequency and for a number of periods to the cylinder liner, which becomes magnetized. In this example the device 3 is adapted to apply at least four periods, or bursts, of the magnetic field. The magnetic flux caused by the magnetization of the cylinder liner produces a current in the coil 13, wherein the sensor 13 senses the magnetization process of the cylinder liner and the total magnetic flux induced.

The device 3 further comprises an estimation module 19, arranged to perform the estimation of the hardness of the component 1, based on the total magnetic flux induced in the component. The device further comprises a determination module 21 arranged to determine whether the estimated hardness lies within an allowed hardness-interval. The device 3 also comprises a selecting module 23 adapted to accept the component for use in the manufacturing when the estimated hardness lies within the allowed hardness interval and to reject the component for use in the manufacturing when the estimated hardness lies outside the allowed hardness interval. The modules may be realized in hardware, software executed on one or more computers, or a combination of hardware and software.

With the invention it has been realized that the total magnetic flux induced in the grey cast iron component 1 correlates with great accuracy with the hardness of the material. Thus a much better estimation of the hardness can be made departing from the total magnetic flux than when using for example Barkhausen noise. The measuring device 3 is further adapted to determine whether the estimated hardness of the material of the cylinder liner lies within an allowed interval. The measurement device 3 is also adapted to emit a message telling if the estimated hardness lies within said allowed interval. If the hardness lies within the allowed interval it is assumed that the cylinder liner has sufficient quality to be used in the vehicle or engine without premature failure. In this example the allowed interval for the estimated hardness is between 250 - 280 HBW, assuming a standard deviation of about 8 HBW and an allowed real hardness between 240 and 290 HBW.

In this example the total magnetic flux measuring device 3, and the electromagnet 7, are adapted to generate a magnetic field varying with a frequency below 60 Hz, preferably below 50 Hz. In this example the frequency is below 2 Hz, but preferably the measurements are made below 1 Hz. Thus the magnetization penetrates deeper into the cylinder liner. The total magnetic flux measuring device 3 is also adapted to generate at least four periods of the magnetic field, in order to acquire a better quality of the measurement.

The device 3 further comprises a measuring circuit 17 connected with the measuring coil 13, and the device is further arranged to measure the total magnetic field response with an analyzing frequency smaller than or equal to 3000 Hz, preferably smaller than or equal to 2400 Hz, and most preferably smaller than or equal to 1800 Hz. The measuring circuit 17 may be arranged to resonate with a particular frequency, meaning that the total magnetic flux having the same frequency will be measured to the greatest magnitude. By setting the measuring circuit 17 to resonate at lower frequencies, the induced magnetic flux that penetrates deeper into the component 1 will be measured. In this example the device 3 is also arranged to be adjustable in regard of the analyzing frequency, so that the total magnetic flux can be measured at different frequencies. Thus more measurement values can be obtained giving a better and more accurate estimation of the hardness. The analyzing frequency may be adjusted by coupling a capacitor in series with the coil, a technique which in itself is known from other applications in the art of electric circuits.

The sensor probe 5 in fig. 2 may also comprise further characteristics and be used in the same manner as the Barkhausen noise measurement device as described in the document WO 2007030050, which is hereby incorporated by reference. The sensor probe 5 thus comprises a second measurement coil 15 arranged to be applied against the surface of the component 1, and adapted to measure changes in the induced magnetic field in the component. The second measurement coil 15 is hence arranged to measure the Barkhausen noise generated in the component 1, and the device 3 is adapted to estimate the hardness of the component 1 based on at least one Barkhausen noise parameter. Even though the total magnetic flux gives a better correlation with and estimation of hardness, it may in some instances be advantageous to estimate the hardness in several ways, which may further increase the accuracy of the estimation.

In this example the device 3 may also be adapted to estimate the residual tension within the cylinder liner, as a linear combination of the magnetic Barkhausen noise parameters and/or the total magnetic flux. The residual tension varies greatly between different locations of the cylinder liner. The device 3 is therefore adapted to estimate an average value of the residual tension. The measuring device 3 is also adapted to determine whether the residual tension lies within an allowed interval. The device 3 is also adapted to determine whether the cylinder liner is allowed depending on the estimated hardness and the estimated residual tension in combination. The residual tension may, either negatively or positively, influence the lifetime of the cylinder liner and hence a combination gives a better estimation of the expected performance of a particular cylinder liner.

In Fig. 3 a method according to the invention is shown in block diagram form.

In block 31 the method comprises automatically applying a sensor probe onto a surface of a cast iron component with a robot arm. The sensor probe comprises a U-shaped body of a ferro-magnetic material and a magnetizing coil winded around a part of the body.

In block 33 the method comprises applying a varying magnetic field over the component with the magnetizing coil. The magnetic field generated by the magnetizing coil is conducted and enhanced by the ferro-magnetic material in the body. The body thus conducts the magnetic field into the component, which becomes magnetized.

In block 35 the method comprises measuring the total magnetic flux induced in the component with a measuring coil. Since all of the magnetic field induced in the component also passes through the sensor body, the measuring coil may be wound around a part of the body. The method further comprises adjusting the analyzing frequency to a frequency below 1800 Hz, by adjusting a measurement circuit coupled with the measuring coil, and measuring the total magnetic flux with an analyzing frequency below 1800 Hz.

In block 37 the method comprises estimating the hardness of the material of the cylinder liner based on the total magnetic flux. The method also comprises estimating the average residual tension in the cylinder liner based on a linear combination of at least one magnetic Barkhausen noise parameter and/or the total magnetic flux.

In block 39 the method comprises determining whether the estimated hardness and/or residual tension each lies within allowed intervals. In this example, since the component is a cylinder liner, the interval of allowed estimated hardness lies between 250 and 280 HBW.

If the estimated hardness and residual tension lies within the allowed intervals the method comprises accepting the cylinder liner in block 41. The method then also comprises using the cylinder liner for production of a vehicle or engine, and may, if need be, comprise further processing of the cylinder liner, and/or assembling the component into the vehicle or engine.

If the estimated hardness and residual tension lies outside the allowed intervals the method comprises rejecting the cylinder liner in block 43. If the hardness and/or residual tension lie near the allowed interval, the method comprises sending the cylinder liner for further testing, and/or reworking the cylinder liner. The rework may for example comprise annealing in order to decrease residual tension. If the hardness and/or residual tension lie far from the allowed interval the cylinder liner may be discarded.

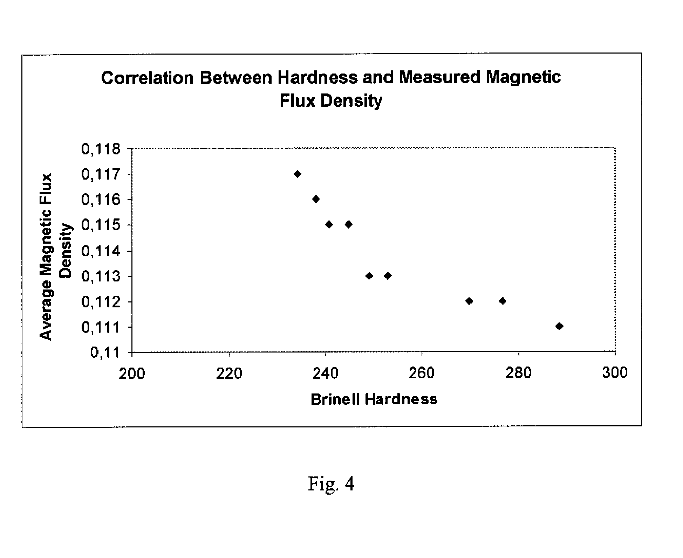

In fig. 4 one example of the correlation between measured hardness and measured magnetic flux is shown.

The hardness was measured using Brinell hardness units, and were measured by using a ball with a diameter of 2,5 mm and a load force of 187,5 kg. The cylinder liners were magnetized with a magnetization frequency of 5 Hz, and a magnetization magnitude of 300 mA. The average flux density was measured with an analyzing frequency band between 1-2100 Hz.

In fig. 4 it is shown that the measurement is almost linear, and very well behaved. The correlation was calculated to -0.92, which is a remarkably high value for estimation of the hardness. Hence the method according to the invention is extremely well suited for determining whether a cylinder liner should be used in the manufacturing of a vehicle or not.

The invention is not limited to the embodiments shown but may be varied within the framework of the following claims. For example, the component need not necessarily be a cylinder liner but may be any component made of cast iron. The invention is not limited to grey cast iron but may be equally applicable to for example white cast iron, nodular iron or any other type of cast iron. The order of the steps may be changed, and some or all steps may be carried out by a supplier before delivery. The surface to be measured may be polished in order to secure an adequate surface roughness.

## Claims

1. A method for handling a component of cast iron intended to be used in a vehicle or in a part for a vehicle, the method comprising:
- applying a magnetic field over the component,
- measuring the total magnetic flux induced in the component,
- estimating the hardness of the material in the component based on the measured total magnetic flux induced, and
- determining whether the estimated hardness lies within an allowed hardness interval.

2. A method according to claim 1, **characterized in that** the method comprises:
- applying a varying magnetic field over the component.

3. A method according to claim 2, **characterized in that** the method comprises:
- applying a varying magnetic field having a frequency lower than 60 Hz over the component.

4. A method according to claim 1, **characterized in that** the method comprises:
- measuring the total magnetic flux induced with an analyzing frequency smaller than or equal to 3000 Hz, preferably smaller than or equal to 2400 Hz, and most preferably smaller than or equal to 1800 Hz.

5. A method according to claim 1, **characterized in that** the method comprises:
- applying a magnetization probe (5) onto the surface of the component, the probe comprising a body (9) made in a magnetically conducting material and a magnetizing coil (11) coiled around one part of the body.

6. A method according to claim 5, **characterized in that** the method comprises:
- measuring the total magnetic flux induced with a measuring coil (13) coiled around another part of the body.

7. A method according to claim 5 or 6, **characterized in that** the body (9) is U-shaped.

8. A method according to any of the claims 1-7, **characterized in that** the method is performed in connection with manufacturing a vehicle or a part for a vehicle, wherein the vehicle or part for a vehicle is to comprise the at least one component (1) of cast iron, the method comprising
- accepting the component for use in the manufacturing of the vehicle or part for a vehicle when the estimated hardness lies within the allowed hardness interval, and rejecting the component for use in the manufacturing when the estimated hardness lies outside the allowed hardness interval.

9. A method according to any of the claims 1-8, **characterized in that** the component (1) comprises a cylinder liner made in grey cast iron.

10. A device (3) adapted for handling at least one component (1) of cast iron intended to be used in a vehicle or in a part for a vehicle, the device comprising a magnetization probe (5) adapted to apply a magnetic field over the component, a measuring circuit (17) adapted to measure the total magnetic flux induced in the component, an estimation module (19) adapted to estimate the hardness of the material in the component based on the measured total magnetic flux induced, and a determination module (21) adapted to determine whether the estimated hardness lies within an allowed hardness interval.
